# EUROPÄISCHE PATENTSCHRIFT

(11) **EP 0 871 274 B1**
(45) Veröffentlichungstag und Bekanntmachung des Hinweises auf die Patenterteilung: **20.11.2002**
(21) Anmeldenummer: 98102036.5
(22) Anmeldetag: 06.02.1998
(51) Int. Cl.: H02J 7/00, H02J 7/02

(54) **Angepasstes Ladegerät für NiMeH-Batterien**
Charging device adapted for charging NiMeH batteries
Dispositif de charge adapté pour charger de batteries NiMeH

(30) Priorität: 10.04.1997 DE 29706354 U
(43) Veröffentlichungstag der Anmeldung: 14.10.1998
(73) Patentinhaber: Microbatterie GmbH, 30419 Hannover (DE)
(72) Erfinder: Knop, Ingmar, 73433 Aaalen (DE)
(74) Vertreter: Patentanwälte Ruff, Wilhelm, Beier, Dauster & Partner

(56) Entgegenhaltungen:
- DE-A- 2 710 662
- DE-A- 19 532 013
- US-A- 4 422 031
- US-A- 4 775 826

## Beschreibung

Gegenstand der Erfindung ist ein für NiMeH-Akkumulatoren geeignetes Akkumulatorengehäuse für tragbare elektronische Geräte, insbesondere für tragbare Telefone, welches mit elektrischen Anschlüssen zur Verbindung mit dem zu versorgenden Gerät und einem getrennten Ladekontakt versehen ist.

Tragbare elektronische Geräte, insbesondere tragbare Telefone sind mit Stromquellen in Form von Akkumulatoren versehen. Diese Akkumulatoren sind in Batteriegehäusen angeordnet, die vom Gehäuse trennbar sind und getrennt aufgeladen werden können. Solche Batteriegehäuse werden auf der Rückseite des Telefons in Führungsschienen eingeschoben, dabei wird gleichzeitig der elektrische Kontakt hergestellt und es erfolgt eine Verriegelung, um unbeabsichtigtes Lösen des Batteriepacks vom Telefon, bzw. vom zu versorgenden Gerät zu vermeiden.

Neben den elektrischen Anschlüssen zur Verbindung mit dem zu versorgenden Gerät besitzen solche Akkumulatorengehäuse oft besondere Ladekontakte, die zum Anschluß der Akkumulatoren im Ladegerät dienen und über welche ein polverkehrtes Laden der angeschlossenen Akkumulatoren verhindert werden soll. Dazu ist in den Ladestromkreis eine Diode geschaltet.

Es hat sich gezeigt, daß bei Verwendung von NiMeH-Akkumulatoren anstelle der üblichen NiCd-Akkumulatoren eine vollständige Aufladung der Akkumulatoren in solchen bekannten Geräten nicht erfolgt.

Dokument DE 195 32 013 A1 offenbart ein Akkumulator und ein Verfahren zur Erkennung des Akkumulatortyps. Der Akkumulator hat einen ersten und einen zweiten Anschluss zur Ladung und Spannungsentnahme. Über einem dritten Anschluß wird ein temperaturabhängiges Signal am Ladegerät abgegeben. Zwischen dem zweiten und dem dritten Anschluß sind eine oder mehrere Dioden in Reihe geschaltet. Durch Anlegen einer Gleichspannungsquelle (im Ladegerät) an den zweiten und den dritten Anschluß in Flußrichtung der Dioden wird zwischen diesen beiden Anschlüssen in Abhängigkeit der Zahl der Dioden ein für den Akkumulatortyp charakteristischer Spannungsabfall bewirkt, mit dessen Hilfe ein geeigneter Ladestrom eingestellt werden kann.

Der Erfindung liegt die Aufgabe zugrunde, ein Akkumulatorengehäuse anzugeben, welches NiMeH-Akkumulatoren enthält und bei welchem eine vollständige Ladung der Akkumulatoren bei Anschluß an die üblicherweise vorhandenen Ladegeräte gewährleistet ist.

Diese Aufgabe wird erfindungsgemäß bei einem Akkumulatorengehäuse der eingangs genannten Art, welches einen getrennten Ladekontakt besitzt und bei dem die Akkumulatoren durch eine in den Ladestromkreis geschaltete Diode gegen polverkehrte Ladung geschützt sind, durch die Merkmale des kennzeichnenden Teils des Anspruchs 1 gelöst.

Gemäß der Erfindung wird durch die zusätzlich in den Ladekreis der NiMeH-Batterie geschaltete Diode die Ladespannung der Akkumulatoren auf das NiCd Niveau erhöht und es wird ein sicheres Abschalten bei Erreichen der vorgegebenen, gegebenenfalls temperaturkompensierten Abschaltspannung gewährleistet.

Im folgenden ist der Gegenstand der Erfindung anhand der Figuren näher erläutert.

Figur 1 zeigt Ladespannungskurven.

Figur 2 zeigt eine erfindungsgemäße Schaltungsanordnung.

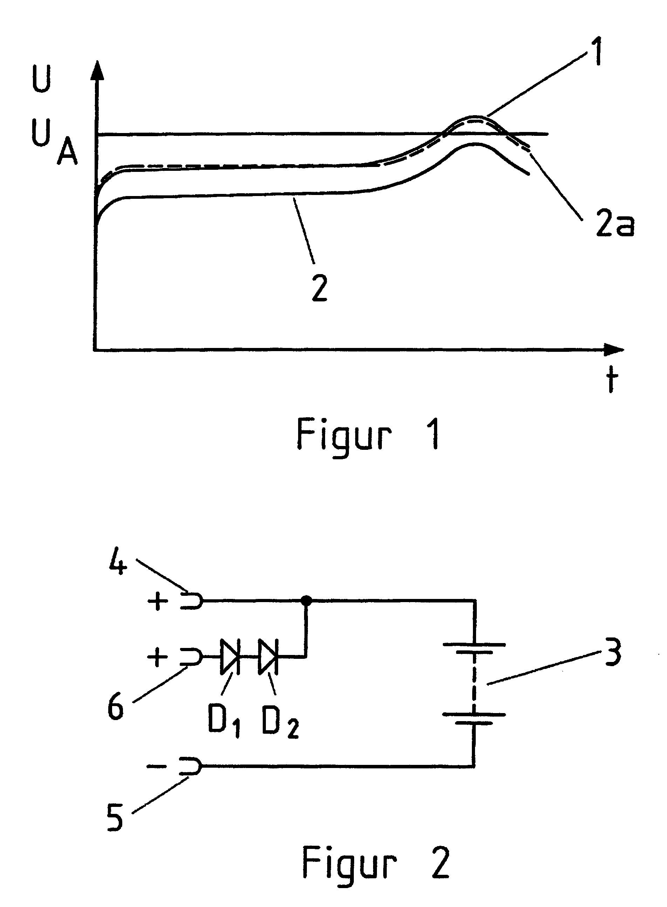

In Figur 1 ist der Ladespannungsverlauf eines üblichen NiCd-Akkumulators mit 1 bezeichnet. Die Spannungskurve 2 stellt den Spannungsverlauf bei einem NiMeH-Akkumulator dar. Die Abschaltspannung des Ladegeräts ist mit U_{A} bezeichnet.

Gemäß Figur 2 besitzt der NiMeH-Akkumulator 3 Entladekontakte 4 und 5 und einen zusätzlichen Ladekontakt 6. In den Ladestromkreis ist in bekannter Weise eine Diode D1 geschaltet, welche eine polverkehrte Ladung des zu ladenden Akkumulators 3 verhindert. Werden in einer solchen Anordnung mit einer Diode D1 die üblicherweise verwendeten NiCd-Akkumulatoren durch NiMeH-Akkumulatoren ersetzt, wird aufgrund der in Figur 1 dargestellten verschobenen Ladekurve 2 von NiMeH-Akkumulatoren die Abschaltspannung U_{A} nicht sicher erreicht

Erfindungsgemäß ist daher die zusätzliche Diode D2 vorgesehen, welche hinsichtlich ihrer Durchlaßspannung so bemessen ist, daß diese dem Produkt aus der Zahl der angeschlossenen Akkumulatoren und der Differenz der Ladespannungen eines NiCd-Akkumulators und eines NiMeH-Akkumulators entspricht.

Für eine übliche 6-zellige Batterie wird zweckmäßigerweise als Diode D2 eine Schottky-Diode mit einer Durchlaßspannung von etwa 0,25 V gewählt. Es ergibt sich dann die in Figur 1 gestrichelt dargestellte Ladespannungskurve 2a.

Mit der erfindungsgemäßen Anordnung können NiMeH-Akkumulatoren bezüglich ihrer Ladespannungskurve weitgehend mit NiCd-Akkumulatoren kompatibel gemacht werden. Durch die Einfügung der erfindungsgemäßen zweiten Diode D2 in Reihe mit der in bekannter Weise vorhandenen Diode D1 wird die scheinbare, nach außen sichtbare Ladespannung der Akkumulatoren-Batterie erhöht und somit an die Ladetechnik für NiCd-Akkumulatoren angepaßt. Da bei den erfindungsgemäßen Anordnungen Lade- und Entladekontakte getrennt sind, haben die Dioden keinen Einfluß auf das Betriebsverhalten des angeschlossenen Gerätes.

## Patentansprüche

1. Ein für NiMeH-Akkumulatoren geeignetes Akkumulatorengehäuse für tragbare elektrische Geräte, insbesondere für tragbare Telefone, mit elektrischen Anschlüssen (4, 5) zur Verbindung an das zu versorgende Gerät und einem getrennten Ladekontakt (6), wobei im Ladestromkreis eine Diode (D1) angeordnet ist, die die NiMeH-Akkumulatoren gegen polverkehrte Ladung schützt, **dadurch gekennzeichnet, daß** in Reihe mit dieser Diode (D1) eine zusätzliche zweite Diode (D2) geschaltet ist, wobei die Durchlaßspannung der Diode (D2) so gewählt ist, daß sie etwa dem Produkt aus der Zahl der im Akkumulatorengehäuse angeordneten NiMeH-Akkumulatoren (3) und der Differenz der Ladespannung zwischen NiMeH- und NiCd-Akkumulatoren entspricht.

2. Akkumulatorengehäuse nach Anspruch 1, **dadurch gekennzeichnet, daß** es 6 NiMeH-Akkumulatoren (3) enthält und daß die Diode (D2) eine Durchlaßspannung von etwa 0,25 V besitzt.

## Claims

1. Rechargeable battery housing, which is suitable for NiMeH rechargeable batteries, for portable electrical appliances, in particular for portable telephones, having electrical connections (4, 5) for connection to the appliance to be supplied, and having a separate charging contact (6), with a diode (D1) being arranged in the charging circuit in order to protect the NiMeH rechargeable batteries against reversed-polarity charging, **characterized in that** an additional, second diode (D2) is connected in series with this diode (D1), with the forward voltage across the diode (D2) being chosen such that it corresponds approximately to the product of the number of NiMeH rechargeable batteries (3) arranged in the rechargeable battery housing and the difference in the charging voltage between NiMeH and NiCd rechargeable batteries.

2. Rechargeable battery housing according to Claim 1, **characterized in that** said rechargeable battery housing contains 6 NiMeH rechargeable batteries (3), and **in that** the diode (D2) has a forward voltage of approximately 0.25 V.

## Revendications

1. Boîtier de batteries pour des batteries NiMeH destiné à des appareils électriques portables notamment des téléphones mobiles, comprenant des branchements électriques (4, 5) pour être reliés à l'appareil d'alimentation et un contact de charge (6) séparé,
le circuit de charge comportant une diode (D1) protégeant les batteries NiMeH contre une inversion de polarité pour la charge,
**caractérisé en ce qu'**
en série avec la première diode (D1) on a branché une seconde diode (D2), la tension passant de la diode (D2) étant choisie pour correspondre sensiblement au produit du nombre de batteries NiMeH (3), placées dans le boîtier et de la différence des tensions de charge des batteries NiMeh et NiCd.

2. Boîtier de batteries selon la revendication 1,
**caractérisé en ce qu'**
il comporte six batteries NiMeH et la diode D2 a une tension passante d'environ 0,25 V.
